# EUROPÄISCHE PATENTSCHRIFT

(11) **EP 4 509 434 B1**
(45) Veröffentlichungstag und Bekanntmachung des Hinweises auf die Patenterteilung: **10.06.2026**
(21) Anmeldenummer: 24187269.6
(22) Anmeldetag: 09.07.2024
(51) Int. Cl.: B65F 3/00, F16D 7/02, B60R 3/02

(54) **TRITTBRETT MIT DREHMOMENTBEGRENZER**
FOOTBOARD WITH TORQUE LIMITER
MARCHEPIED AVEC LIMITEUR DE COUPLE

(30) Priorität: 21.07.2023 DE 102023119295
(43) Veröffentlichungstag der Anmeldung: 19.02.2025
(73) Patentinhaber: FAUN Umwelttechnik GmbH & Co. KG, 27711 Osterholz-Scharmbeck (DE)
(72) Erfinder: Kot, Radoslaw, 55-220 Jelcz-Laskowice (PL)
(74) Vertreter: Regler, Markus Egid

(56) Entgegenhaltungen:
- EP-A1- 4 098 586
- WO-A2-02/085670
- DE-U1- 202005 000 215
- DE-U1- 8 704 842
- US-A- 2 857 750
- US-A- 3 457 733

## Beschreibung

Die Erfindung betrifft ein Trittbrett mit einem Drehmomentbegrenzer mit den Merkmalen von Anspruch 1.

Trittbretter kommen oftmals an Nutzfahrzeugen, insbesondere bei Abfallsammelfahrzeugen, zum Einsatz, um darauf Personal zu transportieren. Zu diesem Zweck sind die Trittbretter klappbar ausgeführt und können von einer geschlossenen, eingeklappten in eine offene, ausgeklappte Position gebracht werden. In der ausgeklappten Position befindet sich die Plattform des Trittbretts im Wesentlichen parallel zur Fahrzeugsaufstandsfläche und kann vom Personal betreten werden. In der eingeklappten Position ist die Plattform des Trittbretts nicht betretbar.

Das Klappen der Trittbretter kann auch komfortabel motorisch, beispielsweise elektromotorisch, auf Knopfdruck erfolgen, so dass die Gesundheit des Personals geschont wird. Die Erfahrung zeigt aber dabei, dass das Personal oftmals durch Drücken oder Treten versucht, den Klappvorgang zu beschleunigen. Gleichermaßen kann das Trittbrett durch ein Hindernis stoßartig bewegt werden. Es besteht die Gefahr, dass durch zu starke Krafteinwirkung auf das Trittbrett das Getriebe und/oder der Motor beschädigt werden.

Ein derartiges Trittbrett gemäß dem Oberbegriff des Anspruchs 1 geht aus der EP 4 098 586 A1 hervor. Die DE 87 04 842 U1, US 3 457 733 A, US 2 857 750 A und DE 20 2005 000 215 U1 offenbaren Drehmomentbegrenzer.

Es ist die Aufgabe der vorliegenden Erfindung, eine Möglichkeit vorzuschlagen, mit der die Gefahr einer Beschädigung von Getriebe oder Motor verringert oder ganz vermieden wird.

Gelöst wird die Aufgabe durch ein Trittbrett mit einem Drehmomentbegrenzer mit den Merkmalen des Patentanspruchs 1. Vorteilhafte Ausgestaltungen der Erfindung sind Gegenstand der abhängigen Ansprüche.

Die Erfindung betrifft Trittbrett, insbesondere für ein Abfallsammelfahrzeug, mit einem Halter und einem beweglichen Teil mit einer Plattform und einer Antriebseinheit mit einem Motor und einem Getriebe, die dazu eingerichtet ist, den beweglichen Teil von einer geschlossenen in eine offene Position und zurück zu bewegen, mit einem Drehmomentbegrenzer, mit einem Trägerelement aufweisend einen scheibenförmigen Teil und einem von diesem vorstehenden hohlzylindrischen Teil, wobei der hohlzylindrische Teil von einer Antriebswelle eines Motors durchgriffen und mit dieser verbunden ist und zumindest ein Zahnrad, das mit einem Getriebeelement verzahnt ist, welches mit dem beweglichen Teil verbunden ist, um diesen zu bewegen, und zumindest eine Reibplatte auf dem hohlzylindrischen Teil angeordnet sind, wobei das zumindest eine Zahnrad und die zumindest eine Reibplatte reibschlüssig in Anlage sind.

Die Plattform des Trittbretts wird von einer eingeklappten, geschlossenen Position, in der sie nicht betreten werden kann, in eine ausgeklappte, offene Position, in der sie betreten werden kann, gebracht. Dies erfolgt über einen Motor und ein Getriebe. Der Drehmomentbegrenzer ist so ausgestaltet, dass er ein maximales, vorbestimmtes Grenzdrehmoment überträgt. Ist das wirkende Drehmoment größer, wird es nicht übertragen. Das verhindert eine Beschädigung von Getriebe und/oder Motor durch unsachgemäße Behandlung des Trittbretts, wenn etwa die die Plattform durch das Bedienpersonal nach oben oder unten gedrückt wird, um den Klappvorgang zu beschleunigen, oder durch Stöße an einem Hindernis. Dann wirken ausgehend von dem beweglichen Teil des Trittbretts Kräfte auf die Getriebekomponenten, so dass diese brechen können.

Im zusammengebauten Zustand greift die Antriebswelle in den hohlzylindrischen Teil des Trägerelements ein und wird mit diesem verbunden. Vorzugsweise sind die Antriebswelle und der hohlzylindrische Teil auch rotationsfest miteinander verbunden. Das von dem Motor, vorzugsweise ein Elektromotor, erzeugte Drehmoment wird über den hohlzylindrischen Teil und über die Reibplatte auf das dort angeordneten Zahnrad und über die Reibplatte übertragen. Das Zahnrad wird gedreht und kann das Drehmoment an andere Getriebeteile oder eine zu bewegende Komponente weitergeben. Das Zahnrad und die zumindest eine Reibplatte sind reibschlüssig in Anlage, was bedeutet, dass die zwischen beiden Komponenten herrschende Reibungskraft dafür sorgt, dass sie sich nicht relativ zueinander bewegen können. Die Reibplatten sind dazu da, die Reibungskraft zwischen dem Zahnrad und benachbarten Komponenten zu verstärken. Beide werden zudem simultan von dem Motor angetrieben, so dass auch aus diesem Grund keine Relativbewegung entsteht. Allerdings sind minimale Gleitbewegungen relativ zueinander akzeptabel und sogar förderlich, da dadurch ein Festkleben der Reibplatte auf dem Zahnrad oder anderen benachbarten Elementen vermieden wird, was der Betriebsfähigkeit des Drehmomentbegrenzers abträglich wäre.

Wird durch eine auf das Getriebe oder die zu bewegenden Komponente wirkende Kraft, ein Drehmoment erzeugt, das die Haftreibungsgrenze zwischen Zahnrad und Reibplatte übersteigt, geht die Haftreibung in Gleitreibung über und die einzelnen Komponenten, etwa das Zahnrad und die Reibplatte oder aber auch die Reibplatte und andere benachbarte Komponenten, können sich relativ zueinander bewegen. Das bedeutet, dass sich beispielsweise das Zahnrad frei dreht oder auch das Zahnrad mit der Reibplatte gegenüber benachbarten Komponenten frei dreht. Es wird kein oder nur ein begrenztes Drehmoment auf den Motor übertragen. Gleichzeitig werden Beschädigungen an Zahnrad und Getriebe vermieden.

Vorzugsweise ist das zumindest eine Zahnrad mit der zumindest einen Reibplatte unter einer vorbestimmten Andruckkraft in Anlage, wobei die Andruckkraft so gewählt ist, dass beim Überschreiten eines auf das Zahnrad wirkenden vorbestimmten Grenzdrehmoments der Reibschluss überwindbar ist. Die Haftreibungsgrenze kann durch die Kraft eingestellt werden, mit der Zahnrad und Reibplatte aneinandergedrückt werden. Damit kann auch ein vorgegebenes Grenzdrehmoment eingestellt werden, bei dessen Überschreiten eine Beschädigung droht. Dieses kann im Vorfeld durch Versuche für das jeweilige Antriebssystem festgestellt werden. Das bedeutet, dass eine durch das Antriebssystem zu bewegende Komponente bis zu einem gewissen Grad gedrückt oder getreten werden kann, solange das Grenzdrehmoment nicht überschritten ist, ohne dass es zu einem Übereinandergleiten von Zahnrad und Reibplatte oder anderer Komponenten kommt.

Weiterhin bevorzugt ist der hohlzylindrische Teil stirnseitig mit der Antriebswelle verschraubt. Damit können die Antriebswelle und der Drehmomentbegrenzer in einfacher Weise aneinander festgelegt werden. Zudem ist eine sichere Übertragung des Drehmoments vom Motor auf den Drehmomentbegrenzer und damit auf des Zahnrad sichergestellt. Zudem wird die Wartung erleichtert, da der Drehmomentbegrenzer einfach abgenommen und repariert oder ersetzt werden kann.

Erfindungsgemäß ist vorgesehen, dass das Zahnrad an zumindest einer Seitenfläche eine Vertiefung aufweist, in der die zumindest eine Reibplatte angeordnet ist. Die Vertiefung kann sich von der Montageöffnung bis hin zur Verzahnung erstrecken. Vorzugsweise ist die Vertiefung an die Außenkontur der Reibplatte angepasst, das heißt, insbesondere ist die Tiefe der Vertiefung gleich oder größer der Dicke der Reibplatte. Das bringt den Vorteil mit sich, dass Bauraum in axialer Richtung eingespart wird, da die Reibplatten nicht zusätzlich oder allenfalls gering auf dem Zahnrad aufbauen. Außerdem können die Reibplatten auf diese Weise zentriert werden, so dass eine optimale Drehmomentübertragung möglich ist.

Weiterhin bevorzugt ist an beiden Seitenflächen des Zahnrads je eine Reibplatte angeordnet. Dadurch wird die Haftreibung vergrößert und die Drehmomentübertragung wird verbessert.

In einer weiteren Ausführungsform der Erfindung ist eine erste Reibplatte mit dem scheibenförmigen Teil des Trägerelements in Anlage. Der scheibenförmige Teil wirkt damit als Gegenlager um die Reibplatte in Anlage mit dem Zahnrad zu halten.

Vorzugsweise kommt eine zweite Reibplatte mit einer auf dem hohlzylindrischen Teil angeordneten Druckplatte in Anlage. Die Druckplatte wirkt dabei als Gegenlager um die Reibplatte in Anlage mit dem Zahnrad zu halten. Sie wird mit einem Andruck beaufschlagt, so dass die Reibplatte mit einer Andruckkraft mit dem Zahnrad in Anlage kommt.

Sind zwei Reibplatten vorgesehen, wird durch die Druckplatte das Zahnrad mit den beiden Reibplatten vorzugsweise gegen den scheibenförmigen Teil des Trägerelements gedrückt, welcher dann als Gegenlager fungiert.

Eine weitere besondere Ausführung der Erfindung sieht vor, dass zwischen dem Zahnrad sowie den Reibplatten und dem Trägerelement ein Gleitlager angeordnet ist. Das Gleitlager ist auf dem hohlzylindrischen Teil angeordnet und darauf wiederum das Zahnrad und die Reibplatten. Die Reibplatten können unmittelbar auf dem Gleitlager sitzen oder so in einer Vertiefung des Zahnrads angeordnet sein, das sie nicht unmittelbar mit dem Gleitlager in Kontakt sind, aber dennoch sich das Gleitlager zwischen Reibplatten und Trägerelement befindet. Diese Anordnung führt dazu, dass das Zahnrad, sobald das Grenzdrehmoment überschritten ist, sich frei gegenüber dem Trägerelement drehen kann.

Besonders bevorzugt ist die Abmessung des Gleitlagers in seiner axialen Richtung kleiner als die Dicke des Zahnrads. Im laufenden Betrieb werden die Reibplatten verschlissen, das heißt, ihre Dicke wird reduziert. Das wiederum führt dazu, dass die daran anliegenden Komponenten, etwa eine Druckplatte oder der scheibenförmige Teil des Trägerelements, näher an das Zahnrad heranwandern. Dadurch, dass die Abmessung des Gleitlagers kleiner ist als die Dicke des Zahnrads, wird gewährleistet, dass diese anliegenden Komponenten nicht gegen das Gleitlager stoßen und dadurch kein Druck mehr auf die Reibplatten ausgeübt wird. Daher sind im ursprünglichen Zustand Lücken zwischen dem Gleitlager und den anliegenden Komponenten ausgebildet.

In einer weiteren Ausführung der Erfindung weist der hohlzylindrische Teil zumindest eine sich von der Stirnseite erstreckende Nut auf, vorzugsweise weist er zwei sich von der Stirnseite erstreckende, sich gegenüberliegende Nuten auf. Diese Nuten dienen dazu, dass Komponenten des Drehmomentbegrenzers formschlüssig auf dem Trägerelement angeordnet werden können, so dass ein Drehmoment auf diese Komponenten übertragen werden können.

Bevorzugt weist die Druckplatte eine Durchgriffsöffnung mit zumindest einem Vorsprung auf, der beim Anordnen der Druckplatte auf dem hohlzylindrischen Teil in dessen korrespondierende Nut eingreift, vorzugsweise weist die Druckplatte eine Durchgriffsöffnung mit zwei sich gegenüberliegenden Vorsprüngen auf, die beim Anordnen der Druckplatte auf dem hohlzylindrischen Teil in dessen korrespondierende Nuten eingreifen. Die Druckplatte wird mit der Durchgriffsöffnung auf den hohlzylindrischen Teil aufgeschoben, so dass die Vorsprünge in die Nuten eingreifen. Damit wird ein Formschluss erzeugt, durch die das Drehmoment des Motors auf die Druckplatte übertragen wird.

Eine weitere Ausführung der Erfindung sieht vor, dass auf dem hohlzylindrischen Teil zumindest eine Tellerfeder angeordnet ist, die in zusammengebautem Zustand unter Vorspannung eine Andruckkraft erzeugt. Vorzugsweise ist die zumindest eine Tellerfeder von der Stirnseite ausgehend vor der Druckplatte angeordnet. Je nach Bauraum und gewünschter Andruckkraft können auch zwei oder mehr Tellerfedern angeordnet werden. Diese sind bevorzugt im Paket angeordnet. Beim Zusammenbau werden die Tellerfedern gespannt und üben eine Kraft in axialer Richtung des Trägerelements aus, mit der die Reibplatten gegen das Zahnrad gedrückt werden. Je nach Grad der Spannung kann die Andruckkraft und damit das Grenzdrehmoment eingestellt werden. Zudem sorgt die Tellerfeder dafür, dass trotz Verschleiß der Reibplatten die Andruckkraft zumindest bis zu einem gewissen Grad erhalten bleibt. Bevorzugt ist die zumindest eine Tellerfeder mir der Druckplatte in Anlage, da dadurch die Andruckkraft unmittelbar auf diese ausgeübt werden kann.

Weiterhin bevorzugt ist eine Mutter endseitig auf dem hohlzylindrischen Teil angeordnet. Der hohlzylindrische Teil weist dafür ein Gewinde auf, auf das die Mutter geschraubt wird. Durch das Aufschrauben wird Druck auf die übrigen Komponenten ausgeübt, insbesondere kann eine vorhandene Tellerfeder dadurch gespannt werden. Die dadurch erzeugte Andruckkraft wächst je weiter die Mutter in das Gewinde gedreht wird und kann dadurch reguliert werden. Folglich kann das gewünschte Grenzdrehmoment durch gezieltes Einschrauben der Mutter eingestellt werden. Vorzugsweise ist eine Zahnscheibe auf dem hohlzylindrischen Teil angeordnet. Die Zahnscheibe ist bevorzugt benachbart zu der Mutter angeordnet, um diese zu sichern und in ihrer Position zu halten, damit das eingestellte Grenzdrehmoment erhalten bleibt.

In einer weiteren Ausgestaltung der Erfindung weist das Getriebeelement einen Durchbruch auf, wobei ein mit dem beweglichen Teil verbundener Bolzen den Durchbruch durchgreift. Bei dem Getriebeelement kann es sich um ein weiteres Zahnelement handeln, etwa ein nur über einen Teil seines Kreisbogens gezahntes Zahnrad. Auf dieses Getriebeelement wird ein Drehmoment übertragen und dieses somit geschwenkt. Diese Schwenkbewegung wird über den den Durchbruch durchgreifenden Bolzen auf den beweglichen Teil des Trittbretts übertragen und so die Klappbewegung ausgeführt.

Wird auf die Plattform beziehungsweise den beweglichen Teil eine zu große Kraft ausgeübt, kann das dazu führen, dass beispielsweise das Getriebeelement bricht. Wie vorstehend beschrieben, wirkt bei Überschreiten eines Grenzdrehmoments der Drehmomentbegrenzer und es findet keine oder nur begrenzte Drehmomentübertragung statt. Dadurch werden Beschädigungen an Motor und Getriebe vermieden.

Vorzugsweise ist der Durchbruch so ausgestaltet, dass das Getriebeelement in einem Winkelbereich von 1° bis 10°, bevorzugt von 3° bis 5°, ohne Übertragung eines Drehmoments beweglich ist, vorzugsweise ist der Durchbruch als Langloch mit kreisbogenförmiger Kontur ausgeführt. Das bedeutet, dass der bewegliche Teil des Trittbretts einen gewisses Spiel gegenüber dem Antriebsmechanismus hat. Bei der Klappbewegung führt das dazu, dass sich das Zahnrad und das Getriebeelement bewegen, diese Bewegung aber erst auf den beweglichen Teil übertragen wird, wenn der Bolzen mit einem Ende des Langlochs in Anlage kommt. Diese Anordnung bewirkt zudem, dass bei kleinen Stößen gegen die Plattform oder den beweglichen Teil allgemein, diese resultierenden hohen Drehmomente nicht unmittelbar auf das Getriebe und den Motor übertragen werden und diese Komponenten somit geschützt werden.

Weiterhin ist bevorzugt vorgesehen. dass ein Kopf des Bolzens dazu eingerichtet ist, bei Einwirken eines vorgesehenen Grenzdrehmoments auf den beweglichen Teil zu brechen. Auch dies ist ein Mechanismus, der dazu führt, dass Getriebeteile und/oder Motor nicht beschädigt werden. Insbesondere ist dieser Mechanismus als zusätzliche Sicherheitseinrichtung vorgesehen, falls der Drehmomentbegrenzer nicht funktioniert, etwa weil die Reibplatten an dem Zahnrad haften. Der Bolzen verfügt über eine Sollbruchstelle, die so ausgestaltet ist, dass sie versagt, wenn eine zu große Kraft darauf ausgeübt wird. Das ist der Fall bei Stößen oder Tritten, gegen die Plattform oder den beweglichen Teil der Plattform. Bricht der Kopf des Bolzens, gibt es keine Verbindung mehr zwischen dem Getriebeelement und dem beweglichen Teil und damit auch keine Drehmomentübertragung mehr. Mit anderen Worten wird auch hier bei Überschreiten eines Grenzdrehmoments die Getriebeanordnung entkoppelt, so dass die Getriebekomponenten und der Motor nicht durch heftige Stöße oder Tritte beschädigt werden. Dieser Mechanismus hat zudem den Vorteil, dass im Schadensfall lediglich der Bolzen ersetzt werden muss, was mit deutlich weniger zeitlichem und finanziellem Aufwand verbunden ist, als wenn einzelne Getriebeteile oder gar der Motor ersetzt werden müssen.

Die Erfindung betrifft zudem ein Abfallsammelfahrzeug mit einem Trittbrett wie vorstehend beschrieben, hier wird zur Vermeidung von Wiederholungen auf die Ausführungen bis hierhin verwiesen.

Das in den nachfolgenden Figuren gezeigte Ausführungsbeispiel mit zugehöriger Beschreibung offenbaren weitere Merkmale der Erfindung. Es zeigen
- Figur 1: ein erfindungsgemäßes Trittbrett in perspektivischer Darstellung,
- Figur 2: die Einbausituation des Elektromotors des Trittbretts,
- Figur 3: Elektromotor und Drehmomentbegrenzer in Explosionsdarstellung,
- Figur 4: den Drehmomentbegrenzer im zusammengebauten Zustand,
- Figur 5: den Drehmomentbegrenzer in Schnittdarstellung,
- Figur 6: den Drehmomentbegrenzer in Explosionsdarstellung,
- Figur 7: das Trägerelement,
- Figur 8: das Zahnrad,
- Figur 9: die Druckplatte,
- Figur 10: eine Teil des beweglichen Teils in Explosionsdarstellung,
- Figur 11: einen Ausschnitt von Figur 10.

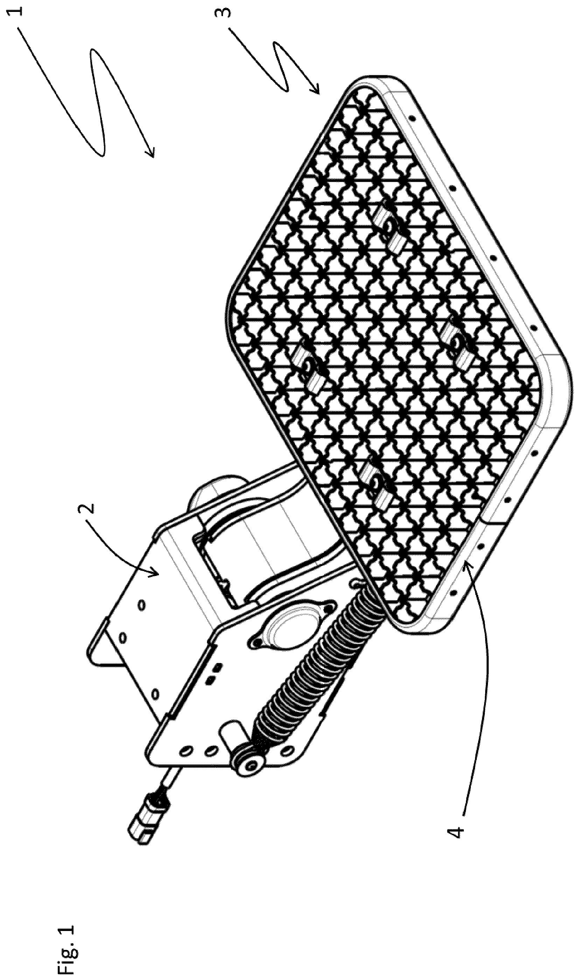

Das in Fig. 1 dargestellte Trittbrett 1 umfasst einen Halter 2, mit dem das Trittbrett 1 an einem Abfallsammelfahrzeug befestigt werden kann, und einen beweglichen Teil 3 mit einer Plattform 4. Hier dargestellt befindet sich der bewegliche Teil 3 in einer ausgeklappten, offenen Position. Die Plattform 4 ist im Wesentlichen parallel zu einer Aufstandsfläche des Fahrzeugs angeordnet, so dass sie vom Bedienpersonal betreten werden kann. Wenn die Plattform 4 nicht benötigt wird, etwa bei einer Überführungsfahrt zum Einsatzort oder zu einer Mülldeponie, kann der bewegliche Teil 3 in eine hochgeklappte, geschlossene Position bewegt werden. Dieser Klappvorgang wird mittels eines Elektromotors 5 und eines Getriebes bewerkstelligt. Untergebracht sind diese Komponenten in einem Innenraum 6 des Halters 2.

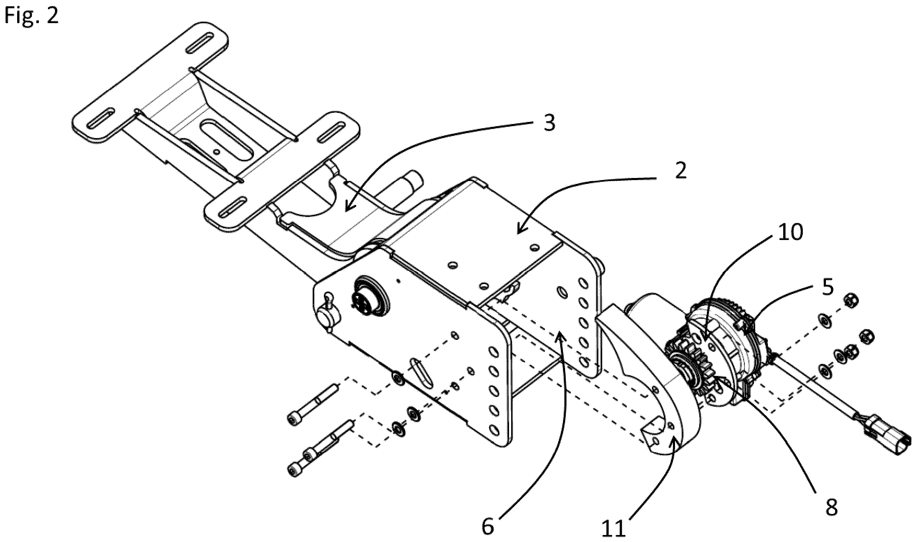

Die Zusammenbausituation ist in der Explosionsdarstellung in Fig. 2 gezeigt. Auf der hier nicht sichtbaren Antriebswelle 7 des Elektromotors 5 ist ein Drehmomentbegrenzer 8 mit einem Zahnrad 9 angeordnet. Mittels einer Motorhalterung 10 ist der Elektromotor 5 in dem Innenraum 6 befestigt. Das Zahnrad 9 wird durch eine Zahnradabdeckung 11 vor Verschmutzung geschützt.

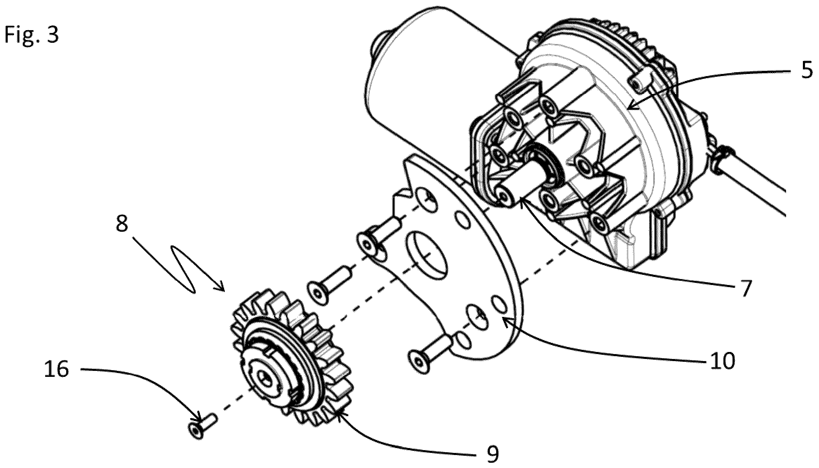

Etwas detaillierter zeigt die Explosionsdarstellung in Fig. 3 den Zusammenbau von Elektromotor 5 und Drehmomentbegrenzer 8. Der nachfolgend noch genauer beschriebene Drehmomentbegrenzer 8 umfasst ein Trägerelement 12 mit einem hohlzylindrischen Teil 13, in den die Antriebswelle 7 eingreift. In dessen Stirnseite 14 ist ein Schraubloch 15 vorgesehen, durch das die Antriebswelle 7 mit einer Schraube 16 mit dem Trägerelement 12 verschraubt wird.

Der Drehmomentbegrenzer 8 hat die Aufgabe, Beschädigungen von Elektromotor 5 und/oder Getriebeteilen zu verhindern. Wird das Trittbrett 1 missbräuchlich betrieben kann es zu solchen Schäden kommen. Es kann vorkommen, dass versucht wird, einen Klappvorgang des Trittbretts 1 zu beschleunigen, indem Druck auf die Plattform 4 ausgeübt wird, oder Bedienpersonen springen auf die Plattform 4 noch bevor der Klappvorgang vollendet ist oder die Plattform 4 stößt gegen ein Hindernis. Dann wirkt ein zu großes Drehmoment auf die Getriebeteile und die entstehenden Kräfte können zu Beschädigungen am Getriebe, beispielsweise Brüchen am Zahnrad 9 und/oder am Elektromotor 5 führen. Der Drehmomentbegrenzer 8 ist so ausgeführt, dass ab einem vorbestimmten Grenzdrehmoment kein Drehmoment mehr von dem Drehmomentbegrenzer 8 übertragen wird.

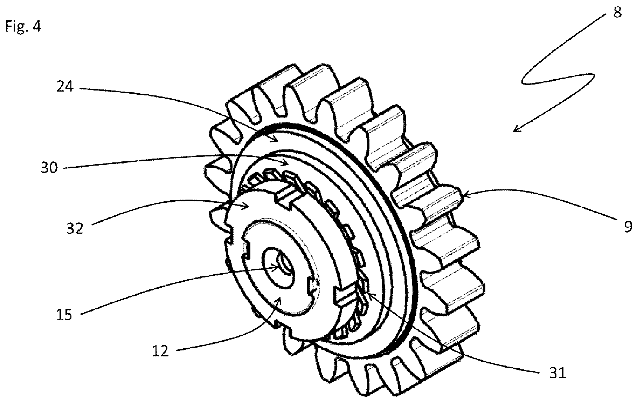

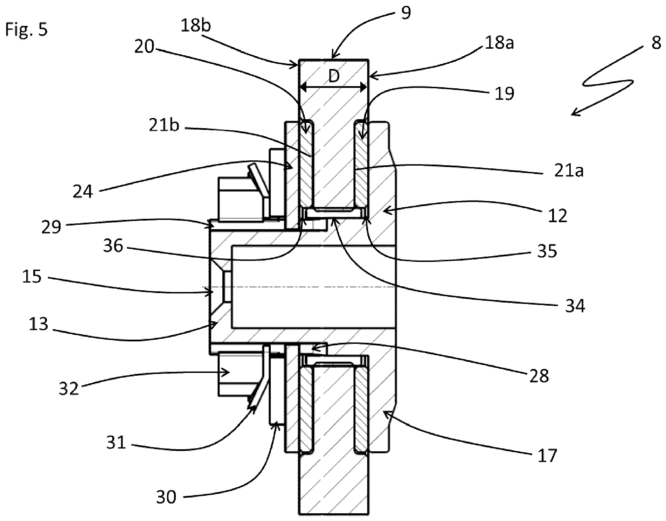

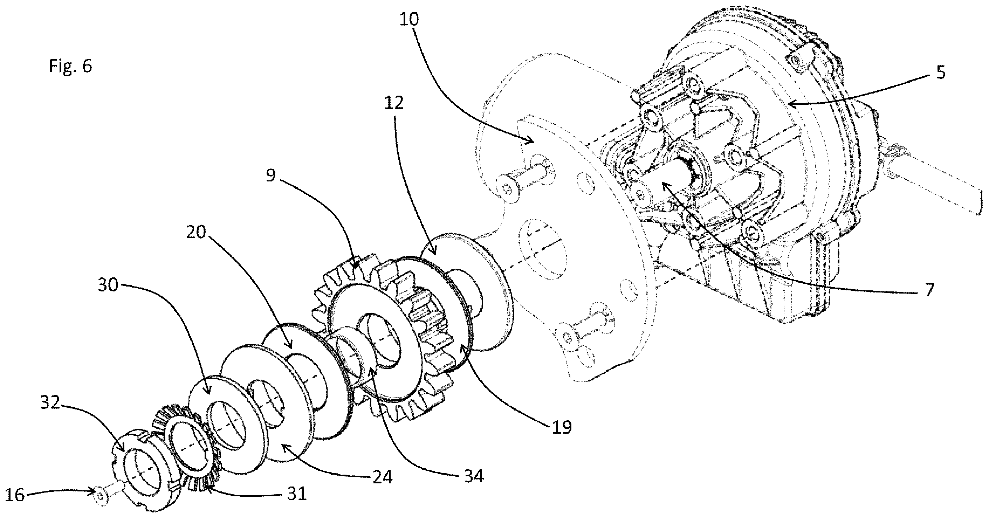

Fig. 4 zeigt den Drehmomentbegrenzer 8 in zusammengebautem Zustand, Fig. 5 zeigt eine Schnittdarstellung und in Fig. 6 sind die Komponenten des Drehmomentbegrenzers 8 in Explosionsdarstellung zu sehen.

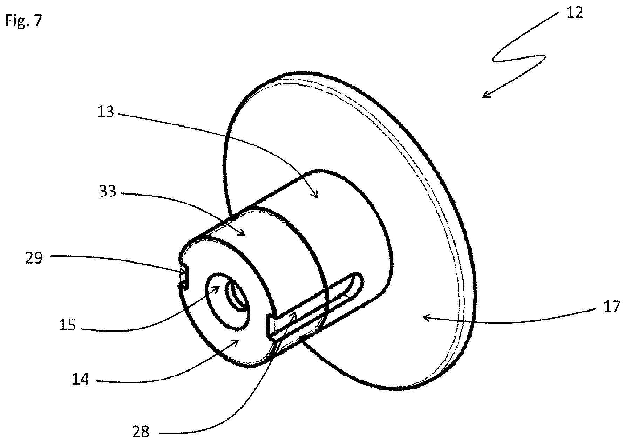

Der Drehmomentbegrenzer 8 weist ein Trägerelement 12 auf mit einem scheibenförmigen Teil 17 und einem von diesem vorstehenden hohlzylindrischen Teil 13, wobei der hohlzylindrische Teil 13 (siehe auch Fig. 7) wie beschrieben von einer Antriebswelle 7 des Elektromotors 5 durchgriffen und mit dieser rotationsfest verbunden ist. Auf dem hohlzylindrischen Teil 13 ist das Zahnrad 9 angeordnet, das mit weiteren Getriebeteilen zusammenwirkt, um das Drehmoment auf den beweglichen Teil 3 zu übertragen.

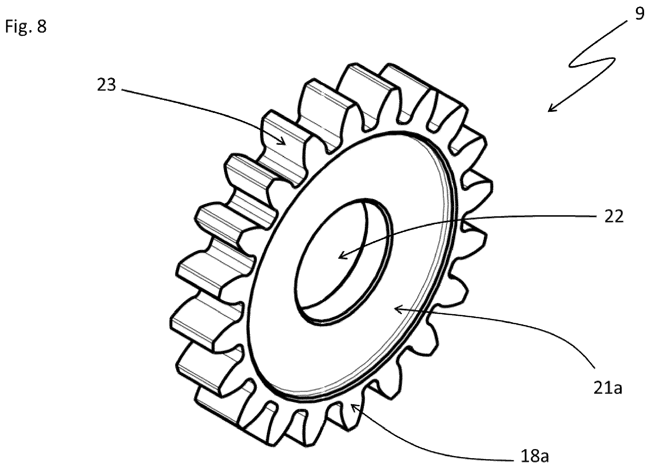

Das Zahnrad 9 (siehe auch Fig. 8) kommt mit seinen Seitenflächen 18a, 18b mit einer ersten Reibplatte 19 und einer zweiten Reibplatte 20 vollflächig in Anlage. Das Zahnrad 9 weist in seinen Seitenflächen 18a, 18b jeweils eine Vertiefung 21a,21b auf, die sich radial von der Montageöffnung 22 fast bis zur Verzahnung 23 erstreckt. In diese Vertiefungen 21a,21b werden die Reibplatten 19,20 eingelegt. Dadurch werden die Reibplatten 19,20 zentriert, so dass stets eine korrekte Anlage an dem Zahnrad 9 gewährleistet ist. Außerdem ist die Tiefe der Vertiefungen 21a,21b an die Dicke der Reibplatten 19,20 in unverschlissenem Zustand angepasst. Die Reibplatten 19,20 ragen daher nicht über die Seitenflächen 18a,18b hinaus, was den benötigten Bauraum in axialer Richtung reduziert (Fig. 5).

Die erste Reibplatte 19 kommt dabei mit dem scheibenförmigen Teil 17 des Trägerelements 12 in Anlage. In der Schnittdarstellung in Fig. 5 ist zu erkennen, dass die erste Reibplatte 19 und der scheibenförmige Teil 17 die gleichen Abmessungen aufweisen.

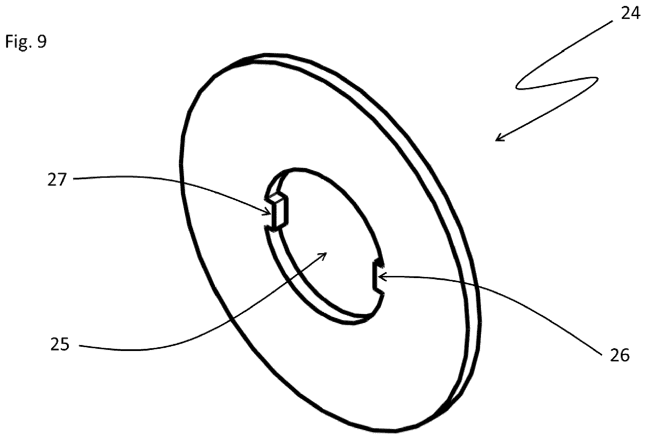

Die zweite Reibplatte 20 kommt mit einer Druckplatte 24 vollflächig in Anlage, die ebenfalls auf dem hohlzylindrischen Teil 13 angeordnet ist. Die Druckplatte 24 (siehe auch Fig. 9) weist eine Durchgriffsöffnung 25 mit zwei Vorsprüngen 26,27 auf. Diese Vorsprünge 26,27 greifen in korrespondierende Nuten 28,29 des hohlzylindrischen Teils 13 ein. Diese Nuten 28,29 erstrecken sich von der Stirnseite 14 in Richtung des scheibenförmigen Teils 17 und sind einander diametral gegenüberliegend. Durch den so erzeugten Formschluss wird die Übertragung des von dem Elektromotor 5 erzeugten Drehmoments gewährleistet. Auch die zweite Reibplatte 20 und die Druckplatte 24 weisen die gleichen Abmessungen auf.

Nach der Druckplatte 24 sind auf dem hohlzylindrischen Teil 13 eine Tellerfeder 30, eine Zahnscheibe 31 und eine Mutter 32 angeordnet. Für die Mutter 32 ist an dem freien Ende des hohlzylindrischen Teils 13 ein Gewinde 33 vorgesehen.

Die Mutter 32 wird auf den hohlzylindrischen Teil 13 geschraubt und spannt dadurch die Tellerfeder 30, so dass in Richtung des scheibenförmigen Teils 17 eine Kraft wirkt. Die Höhe dieser Andruckkraft ist davon abhängig, wie weit die Mutter 32 auf das Gewinde 33 geschraubt wird. Zwischen den Reibplatten 19,20 und dem Zahnrad 9 ergibt sich eine reibschlüssige Verbindung, deren Stärke und damit Grenzreibungskraft von der Andruckkraft abhängt. Wird auf das Zahnrad 9 ein Drehmoment ausgeübt, weil der bewegliche Teil 3 vom Bedienpersonal gedrückt oder gestoßen wird, so ergibt das eine Kraft, die der Reibungskraft zwischen Zahnrad 9 und Reibplatten 19,20 entgegenwirkt. Überschreitet das Drehmoment einen gewissen Wert, so geht die Haftreibung in Gleitreibung über und das Zahnrad 9 gleitet über die Reibplatten 19,20. Das bedeutet, dass an dieser Stelle kein oder nur ein begrenztes Drehmoment zwischen Zahnrad 9 und Elektromotor 5 übertragen wird. Daher wirken auf das Zahnrad 9 keine entgegengesetzten, übermäßigen Kräfte mehr und dieses kann nicht mehr dadurch beschädigt werden. Auch der Elektromotor 5 ist dadurch vor Beschädigungen geschützt.

Das Grenzdrehmoment, bei dem der Reibschluss zwischen Zahnrad 9 und Reibplatten 19,20 überwunden wird, ist wie ausgeführt abhängig von der Andruckkraft, die auf die Reibplatten 19,20 wirkt. Die Andruckkraft kann wiederum durch die Mutter 32 eingestellt werden. Das Grenzdrehmoment hängt von der konkreten Ausführung des Trittbretts 1 ab und kann durch Versuche ermittelt werden. Beim Zusammenbau wird das Grenzdrehmoment durch Verschrauben der Mutter 32 eingestellt. Die Position der Mutter 32 wird dann durch die Zahnscheibe 31 gesichert.

Zwischen dem Zahnrad 9 sowie den Reibplatten 19,20 und dem Trägerelement 12 ist ein Gleitlager 34 angeordnet. Das Gleitlager 34 ist aus Kunststoff ausgeführt. Es dient dazu, die Drehbarkeit des Zahnrads 9 und der Reibplatten 19,20 gegenüber dem Trägerelement 9 beziehungsweise dessen hohlzylindrischen Teil 13 zu gewährleisten. In diesem Ausführungsbeispiel sind die Reibplatten 19,20 unmittelbar mit dem Gleitlager 34 in Berührung. In anderen Ausgestaltungen, beispielsweise bei einer anderen Ausführung der Vertiefung 21a,21b kann das auch nicht der Fall sein.

Die axiale Abmessung des Gleitlagers 34 ist kleiner als die Dicke D des Zahnrads 9. Zwischen dem Gleitlager 34 und dem scheibenförmigen Teil 17 sowie der Druckplatte 24 besteht jeweils eine Lücke 35,36. Im Betrieb verschleißen die Reibplatten 19,20 und werden dünner. Der scheibenförmige Teil 17 und die Druckplatte 24 müssen daher auf das Zahnrad 9 zuwandern, um die Reibplatten 19,20 weiterhin mit der notwendigen Kraft gegen das Zahnrad 9 drücken zu können. Wäre das Gleitlager 34 axial so lang wie das Zahnrad 9 breit, dann würden der scheibenförmige Teil 17 und die Druckplatte 24 gegen das Gleitlager 34 stoßen und könnten keinen Druck mehr auf die Reibplatten 19,20 ausüben. Im Laufe der Zeit werden die Lücken 35,26 kleiner, bis irgendwann dennoch der scheibenförmige Teil 17 und die Druckplatte 24 gegen das Gleitlager 34 stoßen. Dann ist der Drehmomentbegrenzer 8 nicht mehr betriebsfähig und muss gewartet werden und die Reibplatten 19,20 können rechtzeitig ausgetauscht werden.

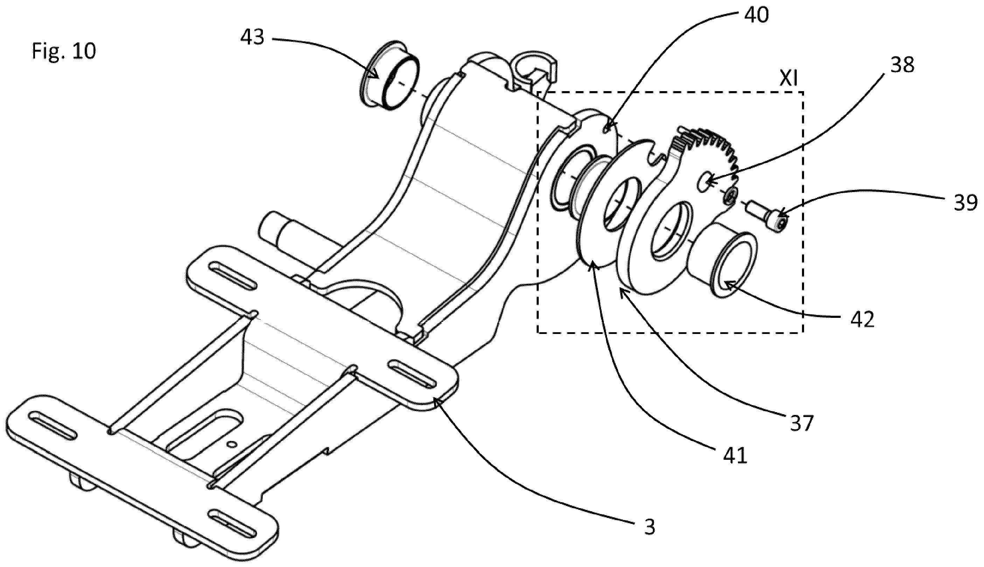

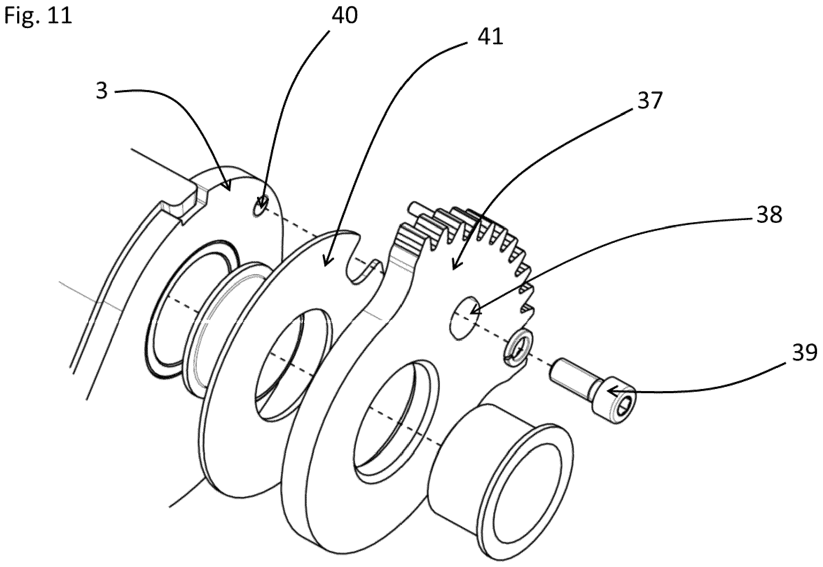

Das Zahnrad 9 ist mit einem Getriebeelement 37 verzahnt, welches mit dem beweglichen Teil 3 des Trittbretts 1 verbunden ist, um diesen zu bewegen (Fig. 10 und 11). Die Verbindung ist mittelbar, denn das Getriebeelement weist einen Durchbruch 38 auf, der von einem Bolzen 39 durchgriffen ist. Bei dem Bolzen 39 kann es sich beispielsweise um eine Schraube handeln. Zwischen Getriebeteil 37 und beweglichem Teil 3 ist eine Unterlegscheibe 41 vorgesehen. Um die Drehbarkeit des beweglichen Teils 3 gegenüber einer hier nicht dargestellten Welle sicherzustellen, sind Lagerbuchsen 42,43 vorgesehen.

Der Bolzen 39 ist an dem beweglichen Teil 3 in einer Bolzenaufnahme 40 fest angeordnet. Wird das Getriebeelement 37 durch das Zahnrad 9 bewegt, nimmt es den Bolzen 39 mit und überträgt so die Bewegung auf den beweglichen Teil 3. Der Durchbruch 38 ist als kreisbogenförmiges Langloch ausgestaltet, in dem sich der Bolzen 39 gleiten kann. Das bedeutet, dass sich das Getriebeelement 37 um einige Winkelgrade frei bewegt, ohne die Bewegung zu übertragen, bis das Ende des Langlochs mit dem Bolzen 39 in Anlage kommt, und dadurch das Drehmoment übertragen wird. Das Getriebeelement 37 ist in einem Winkelbereich von 3° bis 5° frei beweglich. Umgekehrt können kleine Auslenkungen des beweglichen Teils 3 aus seiner jeweiligen Lage auch kein Drehmoment auf das Getriebe übertragen, da sich dann der Bolzen 39 frei in dem Durchbruch 38 bewegt. Dies ist ein weiterer Schutzmechanismus, um Getriebe und Motor vor Beschädigung zu schützen.

Weitergehend ist der Bolzen 39 so ausgeführt, dass sein Kopf bricht, wenn ein zu großes Drehmoment auf den beweglichen Teil 3 einwirkt. Dann wird der Bolzen 39 mit so großer Kraft gegen den Rand des Durchbruchs 38 gedrückt, dass der Bolzen 39 in vorgesehener Weise versagt und bricht. Das Trittbrett 1 ist dann nicht mehr funktionsfähig, kann aber mit überschaubarem Aufwand instandgesetzt werden.

### Bezugszeichen

- 1: Trittbrett
- 2: Halter
- 3: beweglicher Teil
- 4: Plattform
- 5: Elektromotor
- 6: Innenraum von 2
- 7: Antriebswelle von 5
- 8: Drehmomentbegrenzer
- 9: Zahnrad
- 10: Motorhalterung
- 11: Zahnradabdeckung
- 12: Trägerelement
- 13: hohlzylindrischer Teil von 12
- 14: Stirnseite von 13
- 15: Schraubloch
- 16: Schraube
- 17: scheibenförmiger Teil von 12
- 18a: erste Seitenfläche von 9
- 18b: zweite Seitenfläche von 9
- 19: erste Reibplatte
- 20: zweite Reibplatte
- 21a: erste Vertiefung von 9
- 21b: zweite Vertiefung von 9
- 22: Montageöffnung
- 23: Verzahnung
- 24: Druckplatte
- 25: Durchgriffsöffnung von 24
- 26: Vorsprung
- 27: Vorsprung
- 28: Nut
- 29: Nut
- 30: Tellerfeder
- 31: Zahnscheibe
- 32: Mutter
- 33: Gewinde
- 34: Gleitlager
- 35: Lücke
- 36: Lücke
- 37: Getriebeelement
- 38: Durchbruch
- 39: Bolzen
- 40: Bolzenaufnahme
- 41: Unterlegscheibe
- 42: Lagerbuchse
- 43: Lagerbuchse
- D: Dicke von 9

## Patentansprüche

1. Trittbrett (1), insbesondere für ein Abfallsammelfahrzeug, mit einem Halter (2) und einem beweglichen Teil (3) mit einer Plattform (4) und einer Antriebseinheit mit einem Motor (5) und einem Getriebe, die dazu eingerichtet ist, den beweglichen Teil (3) von einer geschlossenen in eine offene Position und zurück zu bewegen,
**dadurch gekennzeichnet, dass**
das Trittbrett (1) einen Drehmomentbegrenzer (8) aufweist, mit einem Trägerelement (12) aufweisend einen scheibenförmigen Teil (17) und einem von diesem vorstehenden hohlzylindrischen Teil (13), wobei der hohlzylindrische Teil (13) von einer Antriebswelle (7) eines Motors (5) durchgriffen und mit dieser verbunden ist und zumindest ein Zahnrad (9), das mit einem Getriebeelement (37) verzahnt ist, welches mit dem beweglichen Teil (3) verbunden ist, um diesen zu bewegen, und zumindest eine Reibplatte (19,20) auf dem hohlzylindrischen Teil (13) angeordnet sind, wobei das zumindest eine Zahnrad (9) und die zumindest eine Reibplatte (19,20) reibschlüssig in Anlage sind und das Zahnrad (9) an zumindest einer Seitenfläche (18a,18b) eine Vertiefung (21a,21b) aufweist, in der die zumindest eine Reibplatte (19,20) angeordnet ist.

2. Trittbrett (1) nach Anspruch 1 **dadurch gekennzeichnet, dass** das zumindest eine Zahnrad (9) mit der zumindest einen Reibplatte (19,20) unter einer vorbestimmten Andruckkraft in Anlage ist, wobei die Andruckkraft so gewählt ist, dass beim Überschreiten eines auf das Zahnrad (9) wirkenden vorbestimmten Grenzdrehmoments der Reibschluss überwindbar ist.

3. Trittbrett (1) nach Anspruch 1 oder 2 **dadurch gekennzeichnet, dass** der hohlzylindrische Teil (13) stirnseitig mit der Antriebswelle (7) verschraubt ist.

4. Trittbrett (1) nach zumindest einem der vorstehenden Ansprüche **dadurch gekennzeichnet, dass** an beiden Seitenflächen (18a, 18b) des Zahnrads (9) je eine Reibplatte (19,20) angeordnet ist.

5. Trittbrett (1) nach zumindest einem der vorstehenden Ansprüche **dadurch gekennzeichnet, dass** eine erste Reibplatte (19) mit dem scheibenförmigen Teil (17) des Trägerelements (12) in Anlage ist.

6. Trittbrett (1) nach zumindest einem der vorstehenden Ansprüche **dadurch gekennzeichnet, dass** eine zweite Reibplatte (20) mit einer auf dem hohlzylindrischen Teil (13) angeordneten Druckplatte (24) in Anlage kommt.

7. Trittbrett (1) nach zumindest einem der vorstehenden Ansprüche**,** wenn vom Anspruch 4 abhängig, **dadurch gekennzeichnet, dass** zwischen dem Zahnrad (9) sowie den Reibplatten (19,20) und dem Trägerelement (12) ein Gleitlager (34) angeordnet ist.

8. Trittbrett (1) nach Anspruch 7 **dadurch gekennzeichnet, dass** die Abmessung des Gleitlagers (34) in seiner axialen Richtung kleiner ist als die Dicke D des Zahnrads (9).

9. Trittbrett (1) nach zumindest einem der vorstehenden Ansprüche **dadurch gekennzeichnet, dass** der hohlzylindrische Teil (13) zumindest eine sich von der Stirnseite (14) erstreckende Nut (28,29) aufweist, vorzugsweise zwei sich von der Stirnseite erstreckende, sich gegenüberliegende Nuten (28,29) aufweist.

10. Trittbrett (1) nach Anspruch 9, wenn vom Anspruch 6 abhängig, **dadurch gekennzeichnet, dass** die Druckplatte (24)
eine Durchgriffsöffnung (25) mit zumindest einem Vorsprung (26,27) aufweist, der beim Anordnen der Druckplatte (24) auf dem hohlzylindrischen Teil (13) in dessen korrespondierende Nut (28,29) eingreift, vorzugsweise die Druckplatte (24) eine Durchgriffsöffnung (25) mit zwei sich gegenüberliegenden Vorsprüngen (26,27) aufweist, die beim Anordnen der Druckplatte (24) auf dem hohlzylindrischen Teil (13) in dessen korrespondierende Nuten (28,29) eingreifen.

11. Trittbrett (1) nach zumindest einem der vorstehenden Ansprüche **dadurch gekennzeichnet, dass** auf dem hohlzylindrischen Teil (13) zumindest eine Tellerfeder (30) angeordnet ist, die in zusammengebautem Zustand unter Vorspannung eine Andruckkraft erzeugt.

12. Trittbrett (1) nach zumindest einem der vorstehenden Ansprüche **dadurch gekennzeichnet, dass** das Getriebeelement (37) einen Durchbruch (38) aufweist, wobei ein mit dem beweglichen Teil (3) verbundener Bolzen (39) den Durchbruch (38) durchgreift.

13. Trittbrett (1) nach Anspruch 12 **dadurch gekennzeichnet, dass** der Durchbruch (38) so ausgestaltet ist, dass das Getriebeelement (37) in einem Winkelbereich von 1° bis 10°, bevorzugt von 3° bis 5°, ohne Übertragung eines Drehmoments beweglich ist, vorzugsweise ist der Durchbruch (38) als Langloch mit kreisbogenförmiger Kontur ausgeführt.

14. Trittbrett (1) nach Anspruch 12 oder 13 **dadurch gekennzeichnet, dass** ein Kopf des Bolzens (39) dazu eingerichtet ist, bei Einwirken eines vorgesehenen Grenzdrehmoments auf den beweglichen Teil (3) zu brechen.

## Claims

1. Footboard (1), in particular for a waste collection vehicle, comprising a holder (2) and a movable part (3) having a platform (4) and a drive unit with a motor (5) and a transmission, which drive unit is designed to move the movable part (3) from a closed position into an open position and back,
**characterized in that**
the footboard (1) has a torque limiter (8), which comprises a support element (12) having a disk-shaped part (17) and comprises a hollow cylindrical part (13) projecting from the disk-shaped part, a drive shaft (7) of a motor (5) passing through and being connected to the hollow cylindrical part (13), and at least one gear wheel (9), which is toothed with a transmission element (37) that is connected to the movable part (3) in order to move the movable part, and at least one friction plate (19, 20) being arranged on the hollow cylindrical part (13), the at least one gear wheel (9) and the at least one friction plate (19, 20) being frictionally in contact and the gear wheel (9) having a recess (21a, 21b) in at least one lateral surface (18a, 18b), in which recess the at least one friction plate (19, 20) is arranged.

2. Footboard (1) according to claim 1, **characterized in that** at least one gear wheel (9) is in contact with at least one friction plate (19, 20) under a predetermined contact pressure, the contact pressure being selected such that the frictional engagement can be overcome when a predetermined limit torque acting on the gear wheel (9) is exceeded.

3. Footboard (1) according to claim 1 or claim 2, **characterized in that** the hollow cylindrical part (13) is screwed to the drive shaft (7) at its end face.

4. Footboard (1) according to at least one of the preceding claims,
**characterized in that** a friction plate (19, 20) is arranged on each of the two lateral surfaces (18a, 18b) of the gear wheel (9).

5. Footboard (1) according to at least one of the preceding claims,
**characterized in that** a first friction plate (19) is in contact with the disk-shaped part (17) of the support element (12).

6. Footboard (1) according to at least one of the preceding claims,
**characterized in that** a second friction plate (20) comes into contact with a pressure plate (24) arranged on the hollow cylindrical part (13).

7. Footboard (1) according to at least one of the preceding claims, if dependent on claim 4, **characterized in that** a sliding bearing (34) is arranged between the gear wheel (9) and the support element (12), as well as between the friction plates (19, 20) and the support element.

8. Footboard (1) according to claim 7, **characterized in that** the dimension of the sliding bearing (34) in its axial direction is smaller than the thickness D of the gear wheel (9).

9. Footboard (1) according to at least one of the preceding claims,
**characterized in that** the hollow cylindrical part (13) has at least one groove (28, 29) extending from the end face (14), preferably two opposing grooves (28, 29) extending from the end face.

10. Footboard (1) according to claim 9, if dependent on claim 6, **characterized in that** the pressure plate (24) has a through-opening (25) having at least one projection (26, 27) which engages in the corresponding groove (28, 29) in the hollow cylindrical part when the pressure plate (24) is arranged on the hollow cylindrical part (13), preferably the pressure plate (24) has a through-opening (25) having two opposing projections (26, 27) which engage in the corresponding grooves (28, 29) in the hollow cylindrical part when the pressure plate (24) is arranged on the hollow cylindrical part (13).

11. Footboard (1) according to at least one of the preceding claims,
**characterized in that** at least one disk spring (30) is arranged on the hollow cylindrical part (13), which disk spring, in the assembled state, generates a contact pressure under preload.

12. Footboard (1) according to at least one of the preceding claims,
**characterized in that** the transmission element (37) has a through hole (38), a bolt (39) that is connected to the movable part (3) passing through the through hole (38).

13. Footboard (1) according to claim 12, **characterized in that** the through hole (38) is designed such that the transmission element (37) is movable in an angular range of 1° to 10°, preferably from 3° to 5°, without transmitting a torque, preferably the through hole (38) is designed as an elongate hole having a circular arc contour.

14. Footboard (1) according to claim 12 or claim 13, **characterized in that** a head of the bolt (39) is designed to break when a specified limit torque is applied to the movable part (3).

## Revendications

1. Marchepied (1), en particulier pour un véhicule de collecte des déchets, comportant un support (2) et une partie mobile (3) comportant une plate-forme (4) et une unité d'entraînement comportant un moteur (5) et une transmission, laquelle unité d'entraînement est conçue pour déplacer la partie mobile (3) d'une position fermée à une position ouverte et inversement, **caractérisé en ce que** le marchepied (1) présente un limiteur de couple (8) comportant un élément de soutien (12) présentant une partie en forme de disque (17) et une partie cylindrique creuse (13) faisant saillie de celle-ci, dans lequel la partie cylindrique creuse (13) est traversée par un arbre d'entraînement (7) d'un moteur (5) et est reliée à celui-ci, et au moins une roue dentée (9) qui est en engrènement avec un élément de transmission (37) qui est relié à la partie mobile (3) pour la déplacer, et au moins une plaque de friction (19, 20) sont disposées sur la partie cylindrique creuse (13), dans lequel l'au moins une roue dentée (9) et l'au moins une plaque de friction (19, 20) sont en contact par friction et la roue dentée (9) présente sur au moins une surface latérale (18a, 18b) un renfoncement (21a, 21b) dans lequel est disposée l'au moins une plaque de friction (19, 20).

2. Marchepied (1) selon la revendication 1, **caractérisé en ce que** l'au moins une roue dentée (9) est en contact avec l'au moins une plaque de friction (19, 20) sous l'effet d'une force de pression prédéterminée, dans lequel la force de pression est choisie de telle sorte que, lors du dépassement d'un couple limite prédéterminé agissant sur la roue dentée (9), la friction peut être surmontée.

3. Marchepied (1) selon la revendication 1 ou 2, **caractérisé en ce que** la partie cylindrique creuse (13) est vissée à l'arbre d'entraînement (7) côté frontal.

4. Marchepied (1) selon au moins l'une des revendications précédentes, **caractérisé en ce que** respectivement une plaque de friction (19, 20) est disposée sur les deux surfaces latérales (18a, 18b) de la roue dentée (9).

5. Marchepied (1) selon au moins l'une des revendications précédentes, **caractérisé en ce qu'**une première plaque de friction (19) est en contact avec la partie en forme de disque (17) de l'élément de soutien (12).

6. Marchepied (1) selon au moins l'une des revendications précédentes, **caractérisé en ce qu'**une seconde plaque de friction (20) vient en contact avec une plaque de pression (24) disposée sur la partie cylindrique creuse (13).

7. Marchepied (1) selon au moins l'une des revendications précédentes, lorsqu'elle dépend de la revendication 4, **caractérisé en ce qu'**un palier lisse (34) est disposé entre la roue dentée (9) et les plaques de friction (19, 20) et l'élément de soutien (12).

8. Marchepied (1) selon la revendication 7 **caractérisé en ce que** la dimension du palier lisse (34) dans sa direction axiale est inférieure à l'épaisseur D de la roue dentée (9).

9. Marchepied (1) selon au moins l'une des revendications précédentes, **caractérisé en ce que** la partie cylindrique creuse (13) présente au moins une rainure (28, 29) s'étendant depuis la face frontale (14), de préférence deux rainures (28, 29) opposées s'étendant depuis la face frontale.

10. Marchepied (1) selon la revendication 9, lorsqu'elle dépend de la revendication 6, **caractérisé en ce que** la plaque de pression (24) présente une ouverture de passage (25) comportant au moins une saillie (26, 27) qui, lors de la disposition de la plaque de pression (24) sur la partie cylindrique creuse (13), vient en prise dans sa rainure (28, 29) correspondante, de préférence la plaque de pression (24) présente une ouverture de passage (25) comportant deux saillies (26, 27) opposées qui, lors de la disposition de la plaque de pression (24) sur la partie cylindrique creuse (13), viennent en prise dans leurs rainures (28, 29) correspondantes.

11. Marchepied (1) selon au moins l'une des revendications précédentes, **caractérisé en ce qu'**est disposée sur la partie cylindrique creuse (13) au moins une rondelle-ressort (30) qui, à l'état assemblé, produit une force de pression sous précontrainte.

12. Marchepied (1) selon au moins l'une des revendications précédentes, **caractérisé en ce que** l'élément de transmission (37) présente un passage (38), dans lequel un boulon (39) relié à la partie mobile (3) traverse le passage (38).

13. Marchepied (1) selon la revendication 12, **caractérisé en ce que** le passage (38) est conçu de telle sorte que l'élément de transmission (37) est mobile dans une plage angulaire allant de 1° à 10°, de préférence de 3° à 5°, sans transmission d'un couple, de préférence le passage (38) est conçu sous la forme d'un trou oblong comportant un contour en arc de cercle.

14. Marchepied (1) selon la revendication 12 ou 13, **caractérisé en ce qu'**une tête du boulon (39) est conçue pour se rompre lorsqu'un couple limite prévu agit sur la partie mobile (3).
